# EUROPEAN PATENT APPLICATION

(11) **EP 3 542 929 A1**
(43) Date of publication of application: **25.09.2019**
(21) Application number: 18163578.0
(22) Date of filing: 23.03.2018
(51) Int. Cl.: B22F 3/105, B33Y 10/00, B33Y 30/00, B33Y 50/00, B29C 64/153, B29C 64/20

(54) **A MONITORING DEVICE FOR MONITORING A GAS FLOW ALONG AN ADDITIVELY ADDED MATERIAL LAYER**

(71) Applicant: United Grinding Group Management AG, 3005 Bern (CH)
(72) Inventor: Cloots, Michael, 9008 St. Gallen (CH); Gutknecht, Kai, 8730 Uznach (CH)
(74) Representative: Maiwald Patent- und Rechtsanwaltsgesellschaft mbH

(57) **Abstract**

The invention relates to a monitoring device for monitoring a gas flow along an addictively added material layer, a monitoring system, a monitoring method, a computer program element for controlling such device or system for performing such method, and a computer readable medium having stored such computer program element. The monitoring device comprises a temperature unit and a processing unit. The temperature unit is configured to provide temperature distribution data of a gas flow layer above the additively added material layer. Further, the processing unit is configured to process the temperature distribution data into gas flow data.

## Description

### FIELD OF THE INVENTION

The invention relates to a monitoring device for monitoring a gas flow along an additively added material layer, a monitoring system, a monitoring method, a computer program element for controlling such device or system for performing such method, and a computer readable medium having stored such computer program element.

### BACKGROUND OF THE INVENTION

EP 3 017 895 A1 discloses a method for producing a component by selective laser melting, wherein a number of lasers arranged next to one another generate a laser field, as a result of which powdery material can be melted in a selective manner for the purposes of generating contours.

For additive manufacturing, e.g., selective laser melting (SLM), a gas flow may be used to avoid an oxidation of a powder material and a moisture absorption by the powder material. Further, the gas flow may support a removal of welding spatter and smoke generated during a laser scanning and thereby a hardening of the powder material. Additionally, an unintended deposition of the powder material in the SLM process chamber can be avoided by the gas flow.

In particular, a homogeneous and laminar gas flow along the entire surface of the spread powder material may be beneficial to enable a reliable additive manufacturing process. At present, however, flow characteristics of a gas flow along the powder material are impossible or at least very difficult to monitor.

### SUMMARY OF THE INVENTION

There may be a need to provide a monitoring device, system and method for monitoring a gas flow along an additively added material layer, which allow improving the additive manufacturing process as well as the additively manufactured products.

The problem of the present invention is solved by the subject-matters of the independent claims, wherein further embodiments are incorporated in the dependent claims. It should be noted that the aspects of the invention described in the following apply also to the monitoring device, the monitoring system for additive manufacturing, the monitoring method, the computer program element, and the computer readable medium.

According to the present invention, a monitoring device is presented. The monitoring device is configured for monitoring a gas flow along an additively added material layer and comprises a temperature unit and a processing unit. The temperature unit is configured to provide temperature distribution data of a gas flow layer above the additively added material layer. The processing unit is configured to process the temperature distribution data into gas flow data.

In other words, a temperature distribution over and along, e.g., spread powder as additively added material layer may be detected or measured. The temperature distribution can be detected by monitoring the spread powder by means of, e.g., an Off-axis CCD or CMOS camera as temperature unit. The temperature unit may detect or measure heat intensities of the spread powder at different positions as temperature distribution data. Such location-dependent heat intensities may indirectly provide information on a quality and/or a behavior of the gas flow over and along different positions of the spread powder as gas flow data. The processing unit may then evaluate the quality and/or the behavior of the gas flow at different positions on basis of the detected heat intensities of the spread powder at different positions.

Such correlation between measured heat intensities of the spread powder at different positions and the quality and/or the behavior of the gas flow over and along the spread powder can be understood as follows. An unintended inhomogeneous laminar or turbulent gas flow along and close to the spread powder may lead to a different heat transfer between the spread powder and the gas flow. The difference in heat transfer may lead to a difference in temperature at the position of the inhomogeneous laminar or turbulent gas flow, which can be detected by means of the temperature unit. The processing unit may then correlate this difference in temperature to a difference in gas flow, which leads to a detection of the position of the unintended inhomogeneous laminar or turbulent gas flow. The knowledge of the position of such gas flow portion with unintended properties might be used to improve the gas flow based on the evaluated gas flow data.

As a result, the monitoring device according to the invention allows improving the additive manufacturing process as well as the additively manufactured products. In particular, it allows monitoring the gas flow for achieving a homogeneous and laminar gas flow, which is beneficial to avoid oxidation of the powder material, moisture absorption by the powder material and unintended deposition of the powder material as well as to remove welding spatter and smoke generated during a laser scanning. Further, the gas flow may be monitored over the entire working space of the additive manufacturing device. As a consequence, a reliable manufacturing process and thereby premium quality products are achieved.

The monitoring device according to the invention is suitable for additive manufacturing systems as, e.g., selective laser melting systems (SLM). Selective laser melting can be understood in that, thin layers of fine metal powder are evenly distributed onto a substrate by means of a doctor blade as coating mechanism, which is fastened to an indexing table that moves in a vertical Z axis. This may take place inside a chamber containing a tightly controlled atmosphere of inert gas and very low oxygen levels. The term "substrate" can be understood as the substrate as such or as a previous powder material layer. Once the layer has been distributed, the 2D layer or slice of the product may be fused or hardened by selectively melting the powder. This may be accomplished by means of a high - power laser beam directed in X and Y directions. The laser energy shall be configured to permit a melting and welding of the fine metal powder particles to form solid metal. This process shall be repeated layer after layer until the product is complete.

In an example, the monitoring device comprises a control unit, which is configured to control the gas flow layer above the additively added material layer based on the gas flow data. In other words, the control unit may subsequently control the gas flow based on the gas flow data from the processing unit in order to provide a homogeneous laminar gas flow. The gas flow may be controlled over the entire working space of the additive manufacturing device. The control may be done on a case-by-case basis or continuously.

In an example, the control unit is configured for real time control of the gas flow layer based on the gas flow data.

In an example, the control unit is configured to control a gas flow unit to provide a uniform and laminar gas flow layer above the additively added material layer. The gas flow unit can be an array of gas nozzles.

The gas flow may be an inert gas flow to further protect the powder material form oxidation.

In an example, the temperature unit is configured to detect a radiation emitted by the gas flow layer and to process the detected radiation into the temperature distribution data. In other words, the temperature unit detects a heat radiation from the gas flow layer above the material layer in order to map the heat intensity to determine the temperature distribution of the gas flow layer.

To monitor the behavior of the gas flow by means of the heat intensities in real time, a thermal detector can be used as temperature unit. Among others, infrared image sensors are suitable as temperature unit for detecting heat radiation. In an example, the temperature unit comprises at least one camera. The camera may be a CCD or a CMOS camera or the like. Charge-coupled devices (CCD) or metal-oxide-semiconductors (CMOS) are silicon-based detectors for capturing images digitally, particularly in the range between 400 and 1100 nm. Both detectors convert light into electric charge and process it into electronic signals. Both detectors allow a simultaneous delivery of high image quality and a camera-on-a-chip integration with low fabrication costs. Hence, the monitoring device does not require any complicated set up for detecting and generating the temperature distribution data by applying an image sensor such as CCD or CMOS.

In an example, the camera is an Off-Axis camera providing an easy access to sensors at the focus. Accordingly, the camera can capture the images without any obstruction of a primary aperture by other equipment, which may influences or manipulate the heat information emitted from the gas flow layer. Further, the additive manufacturing process itself remains unaffected by the Off-Axis measurement and is not subjected to any restrictions.

In an example, the temperature unit comprises a filter element configured to led pass the radiation in a range between 600 and 900 nm. This radiation range corresponds to a temperature range of the gas flow layer above the additively added material layer of about 3000 °K and more. Radiation outside this range can be blocked to e.g. reduce measuring errors and disturbances.

In an example, the processing unit is configured to process a local anomaly in the temperature distribution data relative to a bulk of temperature distribution data into a local anomaly in the gas flow data relative to a bulk of gas flow data. In other words, the local temperature distribution data are correlated with the temperature distribution data. If the local temperature distribution data is anomalous relative to the bulk of temperature distribution data, the processing unit accordingly determines local gas flow data, which are anomalous relative to the bulk of gas flow data. The terms "anomaly" or "anomalous" mean that the local temperature distribution data or local gas flow data (conspicuously) deviate from the bulk of each data, which may refer to a non-uniform or turbulent gas flow layer above the additively added material layer.

In an example, the local anomaly in the temperature distribution data is a temperature peak and the local anomaly in the gas flow data is a spot of turbulent gas flow. In other words, when mapping the temperature distribution data and gas flow data, an irregular behavior of the temperature distribution data may be shown as a temperature peak, whereas an irregular behavior of the gas flow data may be represented as a spot of turbulent gas flow.

In an example, the temperature distribution data are first temperature distribution data and the gas flow layer is the first gas flow layer. Further, the temperature unit is configured to provide at least second temperature distribution data of an at least second gas flow layer arranged above or below the first gas flow layer. In other words, the temperature unit iteratively determines the temperature distribution data of at least two and preferably several single material layers to control several gas flow layers. As a result, several layers of the gas flow may be monitored and controlled layer-by-layer. The control unit may be configured to adjust different gas flow speeds of different gas flow layers. Hence, an even more laminar and uniform gas flow layer may be retained to ensure an even better quality of the produced material layer.

According to the present invention, a monitoring system for monitoring a gas flow along an additively added material layer is presented. The monitoring system comprises monitoring device and a gas flow unit configured to provide the gas flow to be monitored by the monitoring device.

The gas flow unit may comprise at least one gas outlet and at least one gas inlet. The gas outlet may be configured to supply a gas onto the substrate and the gas inlet may be configured to suck the gas flow from the substrate. Hence, the gas flow unit may serve as a passage for the gas and provides a gas circulation onto the material layer in order to prevent an oxidation and a moisture absorption in the powder material. On the other hand, the gas flow unit may remove remaining powder material such as spatter and smoke generated during laser scanning the powder material spread on the substrate. The gas flow unit can be designed in a form of an orifice, a nozzle or a nozzle array.

In an example, the monitoring system further comprises an additive manufacture unit configured to additively add a material layer. The additive manufacture unit is preferably a selective laser melting unit.

In an example, the additive manufacturing unit comprises a doctor blade unit configured to spread a powder the material onto a substrate. The term "substrate" can be understood as the substrate as such or as a previous powder material layer. The term "doctor blade" can be understood as doctor knife, spreading knife, squeegee, scraper, wiper, coater, roller or the like. The doctor unit may be any kind of coating mechanism suitable to spread or distribute material on a substrate or carrier or previous material layer.

In an example, a temperature unit of the monitoring device is configured to provide temperature distribution data of the gas flow above an essentially entire surface of the additively added material layer. Accordingly, the temperature unit allows monitoring the temperature distribution above the entire material layer, which may be correlated with the local temperature distribution data. Hence, the gas flow to the material layer can be controlled to maintain the uniform and laminar gas flow above the entire material layer.

According to the present invention, also a monitoring method for monitoring a gas flow along an additively added material layer is presented. It comprises the following steps:
a) providing temperature distribution data over a gas flow layer of the additively added material layer, and
b) processing the temperature distribution data into gas flow data.

In an example, the monitoring method further comprises a controlling of the gas flow layer above the additively added material layer based on the gas flow data. In other words, the gas flow may be subsequently controlled based on the gas flow data to provide a homogeneous laminar gas flow.

According to the present invention, also a computer program element is presented. The computer program element comprises program code means for causing the monitoring device or system as defined in the independent claims to carry out the steps of the method defined in the independent claim when the computer program is run on a computer controlling the monitoring device or system.

It shall be understood that the monitoring device, the monitoring system, the method for monitoring a gas flow, the monitoring method, the computer program alignment, the computer readable medium having stored such computer program element according to the independent claims have similar and/or identical preferred embodiments, in particular, as defined in the dependent claims. It shall be understood further that a preferred embodiment of the invention can also be any combination of the dependent claims with the respective independent claim.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the accompanying drawings:
Figure 1 shows schematically and exemplarily a side view of an embodiment of a monitoring device and system according to the invention for monitoring a gas flow along an additively added material layer.
Figure 2 shows a schematic overview of steps of a method according to the invention for monitoring a gas flow along an additively added material layer.

### DETAILED DESCRIPTION OF EMBODIMENTS

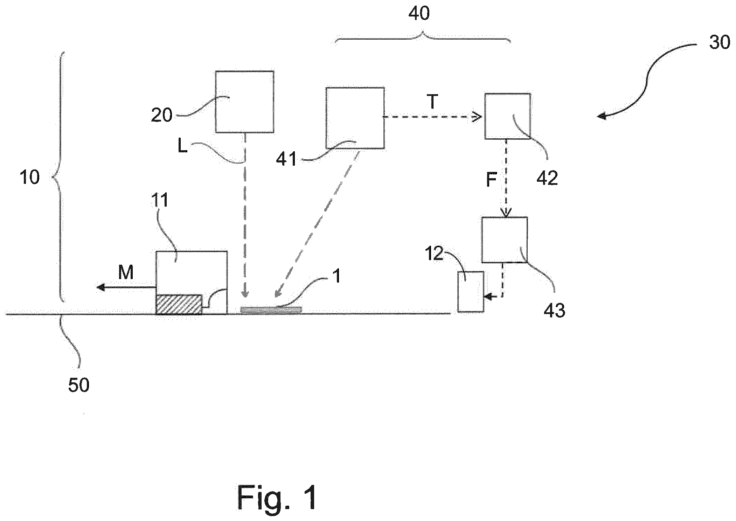

**Figure 1** shows schematically and exemplarily a side view of an embodiment of a monitoring device 40 and system 30 according to the invention for monitoring a gas flow along an additively added material layer 1. The monitoring system 30 comprises the monitoring device 40, a gas flow unit 12 and an additive manufacture unit 10. The gas flow unit 12 provides a gas flow by means of an array of gas nozzles, wherein the gas flow is an inert gas flow. The gas flow unit 12 may comprise at least one gas inlet and at least one gas outlet. The gas outlet supplies an inert gas onto a substrate 50 and the gas inlet sucks the gas flow from the substrate 50.

The additive manufacture unit 10 additively adds a material layer 1. The additive manufacturing unit 10 is here a selective laser melting unit. The additive manufacturing unit 10 comprises a doctor blade unit 11 and a laser unit 20. The doctor blade unit 11 is movable relative to the substrate 50 and spreads powder material onto the substrate 50 or a previous material layer 1. The laser unit 20 irritates the powder material spread onto the substrate 50 by means of the doctor blade unit 11. The irradiation or scanning by the laser unit 20 leads to a melting or welding of the powder material particles into a solid material block. A laser beam L generated by the laser unit 20 hits the spread material behind the doctor blade unit 11 when seen in a movement direction M of the doctor blade unit 11.

The monitoring device 40 according to the invention provides a possibility to control the flow behavior of the inert gas in the chamber of the SLM process. The monitoring device 40 comprises a temperature unit 41, a processing unit 42 and a control unit 43. The temperature unit 41 comprises at least one camera, which is suitable to detect a thermal radiation, for example a CCD camera or CMOS camera. Accordingly, the temperature unit 41 detects a radiation emitted by the gas flow layer above the additively added material layer 1 and processes the detected radiation into the temperature distribution data T. The camera of the temperature unit 41 is here an Off-Axis camera to avoid an obstruction of the primary aperture by other equipment. The temperature unit 41 comprises a filter element, which let pass the radiation in the range between 600 and 900 nm. The temperature unit 41 of the monitoring device 40 provides the temperature distribution data T of the gas flow above essentially entire surface of the additively added material layer 1.

The processing unit 42 processes the temperature distribution data T generated by the temperature unit 41 into gas flow data F. The processing unit 42 identifies a local irregular behavior by means of the temperature distribution data T relative to a bulk of temperature distribution data T representing the temperature distribution of the entire surface of the additively added material layer 1. Further, the processing unit 42 processes such a local anomaly in the temperature distribution data T into a local anomaly in the gas flow data F relative to a bulk of gas flow data F.

The control unit 43 is connected with the processing unit 42 and the gas flow unit 12 to control the gas flow layer above the additively added material data 1 based on the gas flow data F. In particular, the control unit 43 performs a real time control of the gas flow layer and ensures a uniform and laminar gas flow layer above the additively added material layer 1.

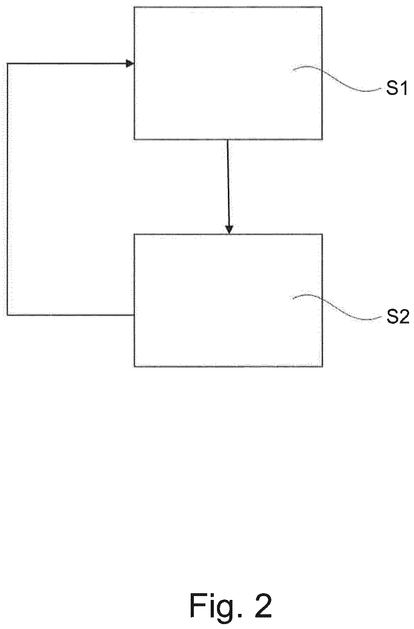

**Figure 2** shows a schematic overview of steps of a method according to the invention for monitoring a gas flow along an additively added material layer. The method comprises the following steps, not necessarily in this order;
- In a first step S1, providing temperature distribution data T of a gas flow layer above the additively added material layer 1, and
- in a second step S2, processing the temperature distribution data T into gas flow data F.

The method for monitoring a gas flow along an additively added material layer 1 may further comprise an optional step (not shown) of controlling the gas flow layer based on the gas flow data F. Moreover, the above-mentioned steps may be repeated for each single added material layer until the desired configuration has been achieved.

In another exemplary embodiment of the present invention, a computer program or a computer program element is provided that is characterized by being adapted to execute the method steps according to the exemplary embodiment, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus'. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it, which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform the method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A monitoring device (40) for monitoring a gas flow along an additively added material layer (1), comprising:
- a temperature unit (41), and
- a processing unit (42),
wherein the temperature unit (41) is configured to provide temperature distribution data (T) of a gas flow layer above the additively added material layer (1), and wherein the processing unit (42) is configured to process the temperature distribution data (T) into gas flow data (F).

2. Monitoring device (40) according to claim 1, further comprising a control unit (43) configured to control the gas flow layer above the additively added material layer (1) based on the gas flow data (F).

3. Monitoring device (40) according to the preceding claim, wherein the control unit (43) is configured to control a gas flow unit (12) to provide a uniform and laminar gas flow layer above the additively added material layer (1), wherein the gas flow unit (12) is preferably an array of gas nozzles.

4. Monitoring device (40) according to claim 2 or 3, wherein the control unit (43) is configured for a real time control of the gas flow layer based on the gas flow data (F).

5. Monitoring device (40) according to one of the preceding claims, wherein the temperature unit (41) is configured to detect a radiation emitted by the gas flow layer and to process the detected radiation into the temperature distribution data (T).

6. Monitoring device (40) according to one of the preceding claims, wherein the temperature unit (41) comprises at least one camera, which is preferably a CCD camera or a CMOS camera.

7. Monitoring device (40) according to the preceding claim, wherein the camera is an Off-Axis camera.

8. Monitoring device (40) according to one of the preceding claims, wherein the temperature unit (41) comprises a filter element configured to let pass the radiation in a range between 600 and 900 nm.

9. Monitoring device (40) according to one of the preceding claims, wherein the processing unit (42) is configured to process a local anomaly in the temperature distribution data relative to a bulk of temperature distribution data into a local anomaly in the gas flow data relative to a bulk of gas flow data.

10. Monitoring device (40) according to the preceding claim, wherein the local anomaly in the temperature distribution data is a temperature peak and the local anomaly in the gas flow data is a spot of turbulent gas flow.

11. Monitoring device (40) according to one of the preceding claims, wherein the temperature distribution data are first temperature distribution data (T) and the gas flow layer is a first gas flow layer, and wherein the temperature unit (41) is further configured to provide second temperature distribution data (T) of a second gas flow layer arranged above or below the first gas flow layer.

12. A monitoring system (30) for monitoring a gas flow along an additively added material layer (1) comprising the monitoring device (40) according to one of the proceeding claims and a gas flow unit (12) configured to provide the gas flow to be monitored by the monitoring device (40).

13. Monitoring system (30) according to the preceding claim, further comprising an additive manufacture unit (10) configured to additively add a material layer (1), wherein the additive manufacture unit is preferably a selective laser melting unit.

14. Monitoring system (30) according to the preceding claim, wherein additive manufacture unit (10) comprises a doctor blade unit (11) configured to spread a powder material onto a substrate (50) or a previous material layer.

15. Monitoring system (30) according to one of the preceding claims, wherein a temperature unit (41) of the monitoring device (40) is configured to provide temperature distribution data (T) of the gas flow above an essentially entire surface of the additively added material layer (1).

16. A monitoring method for monitoring a gas flow along an additively added material layer, comprising the following steps:
- Providing (S1) temperature distribution data of a gas flow layer above the additively added material layer, and
- Processing (S2) the temperature distribution data into gas flow data.

17. A computer program element for controlling a device or system according to one of the preceding device or system claims, which, when being executed by a processing element, is adapted to perform the method steps of the preceding method claim.

18. A computer readable medium having stored the computer program element of the preceding claim.
